# EUROPÄISCHE PATENTANMELDUNG

(11) **EP 1 898 205 A2**
(43) Veröffentlichungstag der Anmeldung: **12.03.2008**
(21) Anmeldenummer: 07017084.0
(22) Anmeldetag: 31.08.2007
(51) Int. Cl.: G01N 15/06, G01N 27/04

(54) **Sensoranordnung, Vorrichtung und Verfahren zur vorausschauenden Ermittlung verschmutzungsbedingter Störfälle einer Schaltanlage, sowie demgemässe Schaltanlage**

(30) Priorität: 07.09.2006 DE 102006042508
(71) Anmelder: ABB PATENT GmbH, 68526 Ladenburg (DE)
(72) Erfinder: Bayer, Bardo, Dipl.-Ing., 67582 Mettenheim (DE); Graf, Ralf, 67065 Ludwigshafen (DE)
(74) Vertreter: Miller, Toivo

(57) **Zusammenfassung**

Die Erfindung betrifft eine Sensoranordnung (2) zur vorausschauenden Ermittlung verschmutzungsbedingter Störfälle, insbesondere in einem Schaltschrank und/oder einer Schaltanlage, wobei wenigstens ein Trägerelement vorgesehen ist, welches wenigstens zwei Sensorelementen (4a,4b) mit jeweils einem oder mehreren parallel ausgerichteten und/oder äquidistant beabstandeten Leiterelementen (6a,6b) aufweist, wobei die Leiterelemente (6a,6b) eines jeden Sensorelementes (4a,4b)jeweils elektrisch parallel geschaltet und elektrisch leitend miteinander verbunden sind, jedes Leiterelement (6a,6b) wenigstens eine elektrisch leitfähige Kontaktfläche (12a,12b) aufweist und jeweils zwei Sensorelemente (4a,4b) derart paarweise angeordnet sind, dass deren Leiterelemente (6a,6b) parallel zueinander ausgebildet sind und wenigstens ein Leiterelement (6a) des einen Sensorelementes (4a) in einen Abstand zwischen Leiterelementen (6b) des jeweils anderen Sensorelementes (4b) eingreift, wodurch eine Art Verzahnung der der beiden Sensorelemente (4a,4b) bewirkt und ein Sensorelementen-Paar gebildet ist. Weiterhin betrifft die Erfindung eine entsprechende Vorrichtung, welche wenigstens eine Strom-/Spannungsquelle (70), sowie wenigstens ein Isolationsmessgerät (72), sowie wenigstens eine erfindungsgemäße Sensoranordnung (2) umfasst, sowie ein Verfahren zum Betrieb der Vorrichtung und eine demgemäße Schaltanlage.

## Beschreibung

Die Erfindung betrifft eine Sensoranordnung zur vorausschauenden Erfassung verschmutzungsbedingter Störfälle in einer Schaltanlage, insbesondere nierderschlagsbedingte Verunreinigungen verursacht durch leitfähige Stäube und/oder Betauung. Weiterhin betrifft die Erfindung eine Vorrichtung mit entsprechender Sensoranordnung zur vorauseilenden Erfassung durch Verunreinigung bedingter Störfälle einer Schaltanlage sowie eine demgemäße Schaltanlage. Auch ein Verfahren zur vorauseilenden Erfassung durch Verunreinigung bedingter Störfälle einer Schaltanlage zur Ausführung auf vorgenannter Vorrichtung wird erfindungsgemäß beansprucht.

Bekannte Vorrichtungen zur Erfassung beziehungsweise Detektion von Stäuben in einer Schaltanlage umfassen in aller Regel einen optischen Sensor, mit dessen Hilfe anhand einer optisch erfassten prozentualen Bedeckung der Optik die jeweilig auftretende Staubablagerung berechnet werden kann. Eine Differenzierung zwischen leitenden und/oder nicht leitenden Stäuben, insbesondere deren Gefährdungspotential hinsichtlich eines möglichen Störfalls einer Schaltanlage grundsätzlich unterschiedliche zu bewerten sind, ist mit einer derartigen Anordnung jedoch nicht möglich.

Aufgabe der Erfindung ist es eine vorausschauende, verbesserte Erfassung sowie eine Klassifizierung von Stäuben, insbesondere in einer Schaltanlage, zu ermöglichen.

Diese Aufgabe wird durch eine Sensoranordnung zur vorausschauenden Erfassung verschmutzungsbedingter Störfälle, insbesondere in einem Schaltschrank und/oder einer Schaltanlage, mit den Merkmalen des Anspruchs 1 gelöst. Vorteilhafte Ausgestaltungen der Erfindung sowie eine Vorrichtung und ein Verfahren zur vorausschauenden Erfassung verschmutzungsbedingter Störfälle in einer Schaltanlage sind in weiteren Ansprüchen der nachfolgenden Beschreibung angegeben.

Die erfindungsgemäße Sensoranordnung zur vorausschauenden Ermittlung verschmutzungsbedingter Störfälle, insbesondere in einem Schaltschrank und/oder einer Schaltanlage, umfasst wenigstens ein Trägerelement welches wenigstens zwei Sensorelemente mit jeweils einem oder mehreren parallel ausgerichteten und/oder äquidistant beabstandeten Leiterelementen aufweist.
Die Leiterelemente eines jeden Sensorelementes sind jeweils elektrisch parallel geschaltet und elektrisch leitend miteinander verbunden. Weiterhin ist jedes Leiterelement mit wenigstens einer elektrisch leitfähigen Kontaktfläche versehen. Jeweils zwei Sensorelemente sind derart paarweise angeordnet, dass deren Leiterelemente parallel zueinander ausgebildet sind und dass wenigstens ein Leiterelement des einen Sensorelementes in einen Abstand zwischen Leiterelementen des jeweils anderen Sensorelementes eingreift, wodurch eine Art Verzahnung, insbesondere eine reisverschlussartige Verzahnung der beiden Sensorelemente bewirkt und ein Sensorelementen-Paar gebildet ist.

In vorteilhafter Weiterbildung ist für jedes Sensorelement auf dem Trägerelement wenigstens ein Anschlusselement, insbesondere eine Anschlussklemme, vorgesehen, über welches das jeweilige Sensorelement elektrisch kontaktierbar ist.

Insbesondere kann es sich dabei auch um eine schraubenlose Anschlussklemme handeln.

Auch ist vorsehbar, dass jedes Sensorelement wenigstens zwei Leiterelemente aufweist.

Die Leiterelemente eines Sensorelementes und/oder die Leiterelemente jeweils zweier paarweise angeordneter Sensorelemente könne vorteilhaft in einer Ebene angeordnet sein.

In einer weiteren Ausgestaltung der Sensoranordnung sind die Leiterelemente zweier paarweise angeordneter Sensorelemente derart ausgebildet, dass deren Kontaktflächen gefluchtet und/oder parallel zueinander angeordnet sind, so dass eine leiterartige Anordnung gebildet ist.

Eine weitere Fortbildung der Sensoranordnung sieht vor, dass das Trägerelement aus elektrisch nicht leitendem oder sehr schwach leitendem Material, insbesondere aus Kapton oder Kunststoff, gebildet ist.

Weiterhin ist vorteilhaft vorsehbar, dass die Leiterelemente zweier paarweise angeordneter Sensorelemente äquidistant beabstandet sind und/oder deren Abstände aufeinander angepasst sind.

In einer weiteren Ausgestaltung der Sensoranordnung sind paarweise angeordnete Sensorelemente mit unterschiedlich beabstandeten Leiterelementen vorgesehen.

Vorteilhaft ist die Empfindlichkeit und/oder Ansprechwahrscheinlichkeit und/oder das Ansprechverhalten eines Sensorelemente-Paares durch den Abstand zweier benachbarter Kontaktflächen bestimmbar, wobei durch einen kleineren Abstand eine höhere Empfindlichkeit und durch einen größeren Abstand eine geringere Empfindlichkeit bewirkt werden kann.

Vorteilhaft ist mittels der Größe des Abstandes zwischen den Leiterelementen, insbesondere der Größe des Abstandes zwischen den Kontaktflächen der Leiterelemente zweier paarweise angeordneter Sensorelemente die Empfindlichkeit und/oder die Ansprechwahrscheinlichkeit des jeweiligen Sensorelementen-Paares und/oder der Sensoranordnung bestimmbar.

In vorteilhafter Ausgestaltung weist wenigstens ein Trägerelement mehrere Sensorelemente-Paare auf, wobei auf Ober- und Unterseite jeweils wenigstens ein Sensorelementen-Paar vorsehbar ist

In vorteilhafter Ausgestaltung ist wenigstens ein Trägerelement als Platine ausgebildet , welches Leiterelemente mit Kontaktfläche sowie deren elektrische Verbindungen aufweist, die als Leiterbahnen ausgebildet und/oder auf das Trägerelement aufgebracht sind, wobei die Leiterbahnen abgesehen vom Anschlusselement und den Kontaktflächen elektrisch gegenüber der Umgebung isoliert sind.

Für jedes Sensorelement ist dabei wenigstens ein Anschlusselement vorsehbar, wobei mehrere Sensorelemente auch über ein gemeinsames Anschlusselement kontaktiert werden können.

Weiterhin ist vorteilhaft vorsehbar, dass mehrere Leiterplatten und/oder Platinen mit jeweils wenigstens einem Sensorelementen-Paar mit Anschlusselementen zu einer räumlichen Leiterplattenanordnung zusammengefügt sind, wobei wenigstens ein Probenkörper mit zumindest einer Haltevorrichtung zur Aufnahme von zwei, drei, vier oder mehreren derartigen Leiterplatten und/oder Platinen vorsehbar ist.

Die Platinen und/oder Leiterplatten sind dabei vorteilhaft einander beabstandet angeordnet.

In vorteilhafter Weiterbildung weist die Haltevorrichtung des weiteren einen Klemm- und/oder Federmechanismus und/oder eine Führung zum Einbau und/oder Arretieren der entsprechenden Leiterplatten und/oder Platinen auf.

In einer weiteren Ausgestaltung weist wenigstens eine Leiterplatte und/oder Platine Ausnehmungen zum Eingriff der Haltevorrichtung und/oder Ausnehmungen zum Durchgriff von Schrauben auf und/oder ist mittels Schraubverbindung mit dem Probenkörper verbunden.

Weiterhin kann der Probenkörper eine Befestigungsvorrichtung zur Montage in einem Schaltschrank und/oder einer Schaltanlage aufweisen.

Auch wird die gestellte Aufgabe durch eine Vorrichtung zur vorausschauenden Ermittlung verschmutzungsbedingter Störfälle einer Schaltanlage gelöst, welche wenigstens eine Strom-/Spannungsquelle, sowie wenigstens ein Isolationsmessgerät, sowie wenigstens eine erfindungsgemäße Sensoranordnung gemäß einem der Ansprüche 1 bis 21 umfasst, wobei jeweils Sensoranordnung und Isolationsmessgerät in ein, mittels der Strom-/Spannungsquelle gebildetes elektrisches Sensornetz geschaltet sind, über welches sie zusammenwirken und dessen Eigenschaften vom lsolationsmessgerät überwacht sind und wobei durch Ablagerungen und/oder Verunreinigungen auf der Sensoranordnung eine Schädigung der Isolationsfähigkeit des Sensornetzes bewirkt ist, welche detektierbar ist.

In vorteilhafter Ausgestaltung ist als Strom-/Spannungsquelle ein Trenntransformator eingesetzt, der an ein bestehendes elektrisches Netz, insbesondere einer Schaltanlage, gekoppelt ist.

Auch ist vorteilhaft vorsehbar, dass wenigstens eine der Sensoranordnungen einen offenen Probenkörper mit mehreren Platinen und/oder Leiterplatten Sensorelementen mit blanken, elektrisch leitfähigen Kontaktflächen aufweist, auf denen sich Staub, Schmutz und/oder Feuchtigkeit bei Kondensation niederschlagen, wobei der Probenkörper derart ausgebildet und/oder angeordnet sein kann, dass er möglichst gut und/oder gleichmäßig von Luft umströmt und/oder durchströmt ist.

Über die Strom-/Spannungsquelle kann einem jeweiligen Sensorelemente-Paar über die entsprechenden Anschlusselemente eine Potentialdifferenz und/oder eine Spannung beaufschlagt werden, welche dann, zumindest anteilig, auch zwischen zwei benachbarten, aufeinanderfolgenden Kontaktflächen eines Sensorelementen-Paares anliegt.

Bei Ablagerung von Verunreinigungen, wie insbesondere Stäube oder Feuchtigkeit, zwischen zwei benachbarten Kontaktflächen, kann demgemäß ein Stromfluss zwischen beiden Kontaktflächen beziehungsweise deren Leiterelementen und damit auch zwischen den zugehörigen Sensorelementen bewirkt werden, durch welchen die Isolationsfähigkeit des Sensornetzes geschädigt wird.

Eine Schädigung der Isolationsfähigkeit des Sensornetzes, insbesondere ein Stromfluss zwischen zwei benachbarten Kontaktflächen eines Sensorelemeneten-Paares, kann vorteilhaft durch das Isolationsmessgerät festgestellt werden.

In vorteilhafter Weiterbildung der Vorrichtung ist ein akustischer und/oder optischer Signalgeber vorgesehen, der mit dem Isolationsmessgerät zusammenwirkt und bei Auftreten einer Schädigung der Isolationsfähigkeit des Sensornetzes ein entsprechendes Signal generiert.

Weiterführend ist auch eine Testvorrichtung zur Überprüfung der Funktionsfähigkeit des lsolationsmessgerätes, insbesondere ein Schalter oder Taster, vorsehbar.

Vorteilhaft ist die Vorrichtung auch in einem Schaltschrank und/oder einer Schaltanlage einsetzbar ist.

Auch eine Schaltanlage mit wenigstens einer Vorrichtung zur vorausschauenden Ermittlung verschmutzungsbedingter Störfälle gemäß einem der Ansprüche 21 bis 29 löst die gestellte Aufgabe.

Vorteilhaft ist eine detektierte Schädigung des jeweiligen Sensornetzes der Vorrichtung in Abhängigkeit des Abstandes zwischen zwei benachbarten Kontaktflächen der eingesetzten Sensoranordnung dabei ein Maß für den Grad der Verunreinigung der Schaltanlage.

Die gestellte Aufgabe wird ebenfalls durch ein Verfahren zur vorausschauenden Ermittlung verschmutzungsbedingter Störfälle einer Schaltanlage gelöst, wobei mittels wenigstens einer Strom-/Spannungsquelle, sowie wenigstens eines Isolationsmessgerätes, sowie wenigstens einer Sensoranordnung gemäß einem der Ansprüche 1 bis 21 ein elektrisches Sensornetz gebildet wird, über welches Sensoranordnung und Isolationswächter zusammenwirken und dessen Eigenschaften vom Isolationsmessgerät überwacht werden, wobei Ablagerungen und/oder Verunreinigungen auf der Sensoranordnungen eine Schädigung der Isolationsfähigkeit des Sensornetzes bewirken, welche detektiert wird.

Dem jeweiligen Sensorelemente-Paar kann vorteilhaft eine Potentialdifferenz und/oder eine Spannung beaufschlagt werden, durch welche bei Ablagerung von Verunreinigungen zwischen zwei benachbarten Kontaktflächen der jeweiligen Sensoranordnung ein Stromfluss bewirkt wird, welcher die Isolationsfähigkeit des Sensornetzes schädigt.

Weiterführend gibt eine detektierte Schädigung des jeweiligen Sensornetzes in Abhängigkeit des Abstandes zwischen zwei benachbarten Kontaktflächen der eingesetzten Sensoranordnung Aufschluß über den Grad der Verunreinigung der jeweiligen Schaltanlage.

Vorteilhaft wird die Empfindlichkeit und/oder Ansprechwahrscheinlichkeit und/oder das Ansprechverhalten eines Sensorelemente-Paares durch den Abstand zweier benachbarter Kontaktflächen bestimmt, wobei durch einen kleineren Abstand eine höhere Empfindlichkeit und durch einen größeren Abstand eine geringere Empfindlichkeit bewirkt wird.

Auch kann eine detektierte Schädigung des jeweiligen Sensornetzes der Vorrichtung in Abhängigkeit des Abstandes zwischen zwei benachbarten Kontaktflächen der eingesetzten Sensoranordnung als ein Maß für den Grad der Verunreinigung der Schaltanlage herangezogen werden.

Die weitere Darlegung der Erfindung sowie vorteilhafter Ausgestaltungen und Weiterbildungen der Erfindung erfolgt anhand einiger Figuren und Ausführungsbeispiele.

Es zeigen:
- Fig. 1: beispielhafte erfindungsgemäße Sensoranordnung
- Fig. 2: beispielhaft als Platine ausgestaltete Sensoranordnungen in unterschiedlichen Empfindlichkeiten beziehungsweise Abständen der Kontaktflächen
- Fig. 3: beispielhafte ausgebildete erfindungsgemäße Sensoranordnung mit drei Empfindlichkeiten beziehungsweise mit drei verschiedenen Sensorelemente-Paaren
- Fig. 4: beispielhaft ausgestaltete Sensoranordnung mit vier räumlich angeordneten Platinen mit je zwei Sensorelementen-Paaren
- Fig. 5: beispielhafte Sensoranordnung mit ringartigem Probenkörper und vier Patinen gemäß Fig. 4
- Fig. 6: beispielhafte geometrische Grundformen möglicher Probenkörper und Sensoranordnungen
- Fig. 7: beispielhafte Vorrichtung zur Ausführung des erfindungsgemäßen Verfahrens

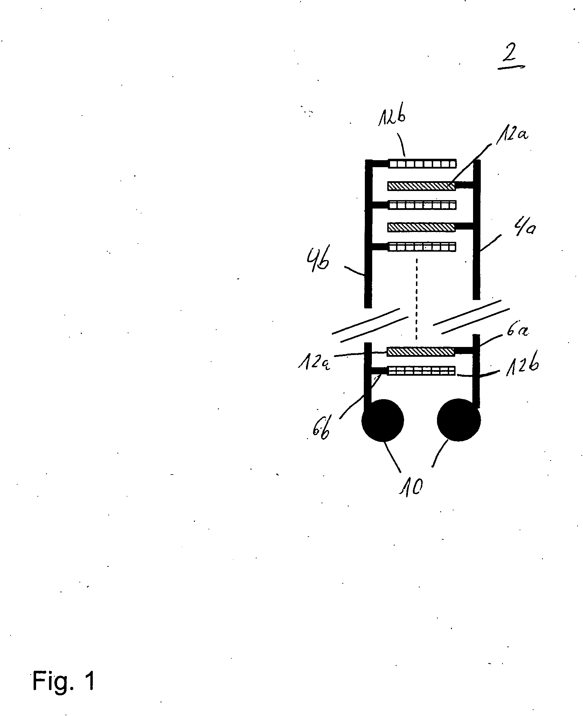

In Fig. 1 ist eine Sensoranordnung 2 mit zwei Sensorelementen 4a, 4b gezeigt, wobei jedes Sensorelement 4a, 4b wenigstens je ein Leiterelement 6a, 6b aufweist. Im gezeigten Beispiel sind mehrere Leiterelemente 6a, 6b je Sensorelement 4a, 4b vorgesehen, wobei diese parallel ausgerichtet und äquidistant beabstandet angeordnet sind. Die Leiterelemente 6a, 6b eines jeden Sensorelementes sind elektrisch leitend verbunden, sind aus elektrisch leitendem Material gebildet und elektrisch parallel geschaltet und leitend mit einem Anschlusselement 10, insbesondere einer Anschlussklemme, verbunden, insbesondere zum Anschluß an ein elektrisches Netz..

Weiterhin sind die Leiterelemente 6a,6b der beiden Sensorelemente 4a,4b untereinander vorteilhaft derart angeordnet, dass die Leiterelemente 6a,6b eines Sensorelementes 4a,4b in die Abstände des jeweils anderen Sensorelementes 4b,4a eingreifen, wodurch eine Art Verzahnung gegeben ist. Dadurch wird ein Sensorelemente-Paar gebildet.

Die Leiterelemente 6a,6b weisen eine Kontaktfläche 12a,12b auf, welche elektrisch leitfähig und/oder elektrisch kontaktierbar ausgebildet ist, wohingegen die übrigen Oberflächenbereiche, insbesondere der Leiterelemente 6a, 6b und deren Verbindungen, mit einer elektrischen Isolierung versehen sind.

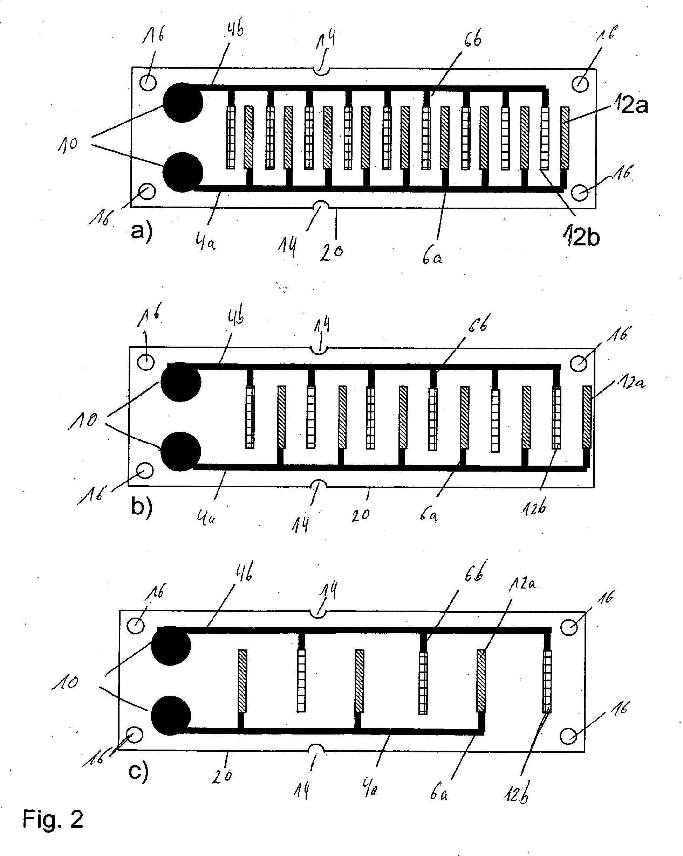

In Fig. 2 ist eine als Platine 20 ausgebildete Sensoranordnung gemäß Fig. 1 gezeigt. Die Sensorelemente 4a,4b sind dabei als aufgebrachte Leiterbahnen ausgebildet. Die leidenden Strukturen sind mittels gängiger Praxis beziehungsweise unter Verwendung üblicher Verfahren aufgebracht und gegenüber der Umgebung elektrisch isoliert. Lediglich die Kontaktflächen 12a,12b der Leiterelemente 6a,6b sowie die Bereiche der Anschlusselemente 10 sind zumindest anteilig freigelegt und elektrisch kontaktierbar.

Die Leiterelemente 6a,6b der Sensorelemente-Paare verschiedener Leiterplatten und/oder Platinen 20 können auch zueinander unterschiedliche Abstände aufweisen. Auf diese Weise lassen sich unterschiedliche Empfindlichkeiten beziehungsweise Ansprechwahrscheinlichkeiten für verschiedene Sensoranordnungen vorbestimmen. Je geringer der Abstand der Leiterelemente 6a,6b einer Leiterplatte ist, desto empfindlicher reagiert der entsprechende Sensor beziehungsweise die entsprechende Sensoranordnung auf Verschmutzungen. Dies bedeutet jedoch auch, dass der Sensor beziehungsweise die jeweilige Sensoranordnung um so früher auf Verschmutzungen reagiert, je geringer der Abstand der Leiterelemente 6a,6b beziehungsweise ihrer Kontaktflächen 12a,12b ausgebildet ist. Auf diese Weise lässt sich unter anderem bestimmen, wie weit vorausschauend die jeweilige Sensoranordnung ausgebildet ist. Die Abstände werden von Fig. 2a) über 2b) nach 2c) immer größer.
Je geringer der Abstand der einzelnen Leiterelemente 6a,6b einer Sensoranordnung ist, desto früher gibt die Sensoranordnung bei Verschmutzungen Alarm und desto länger beziehungsweise desto vorausschauender wird dabei vor einem möglichen Ausfall oder Störfall der jeweiligen Schaltanlage gewarnt.

Auf diese Weise lassen sich Sensorenordnungen ausbilden, die beispielsweise abgestuft in unterschiedlichen Zeitabständen vor einem möglichen Störfall vor dem auftreten eines möglichen Störfall warnen. Dies kann beispielsweise mehrere Tage, eine Woche, einen Monat oder mehrere Monate gegebenenfalls sogar ein Jahr oder länger vor einem Störfall geschehen.

Vorteilhaft weist die Platine erste Ausnehmungen 14 zu deren Befestigung in einer Haltevorrichtung und/oder zweite Ausnehmungen 16 zu deren Verschraubung auf.

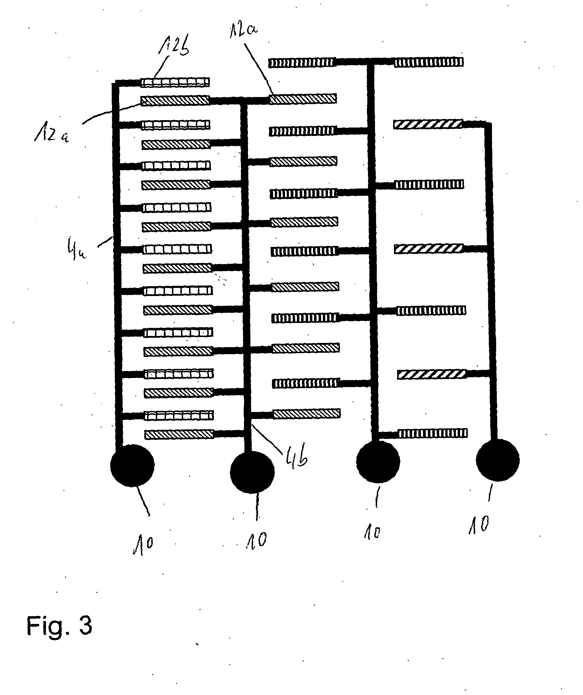

Weiterhin kann eine Sensoranordnung, wie in Fig. 3 gezeigt, auch mehrere flächig ausgebildete Sensorelemente-Paare aufnehmen, wobei sich Sensorelemente verschiedener Paare auch über gemeinsame Anschlusselemente verfügen können.

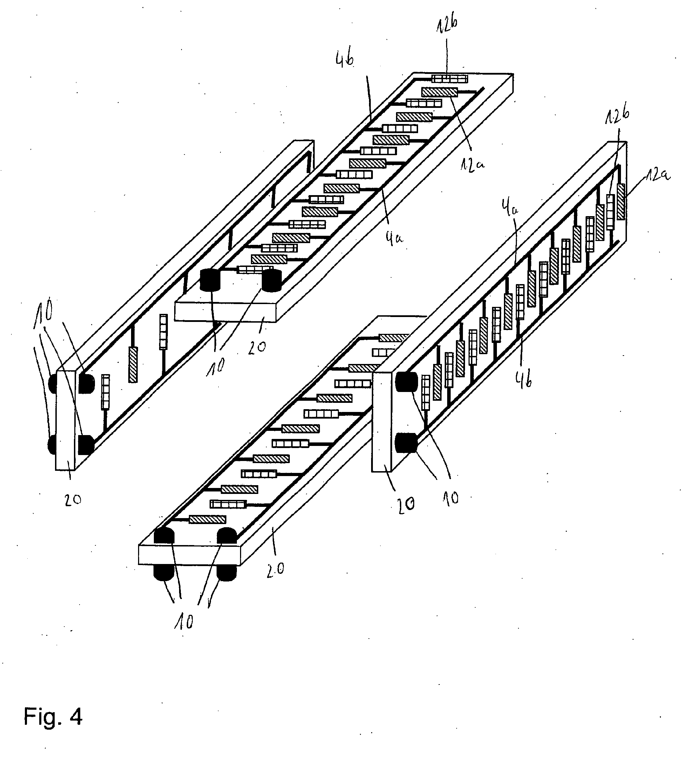

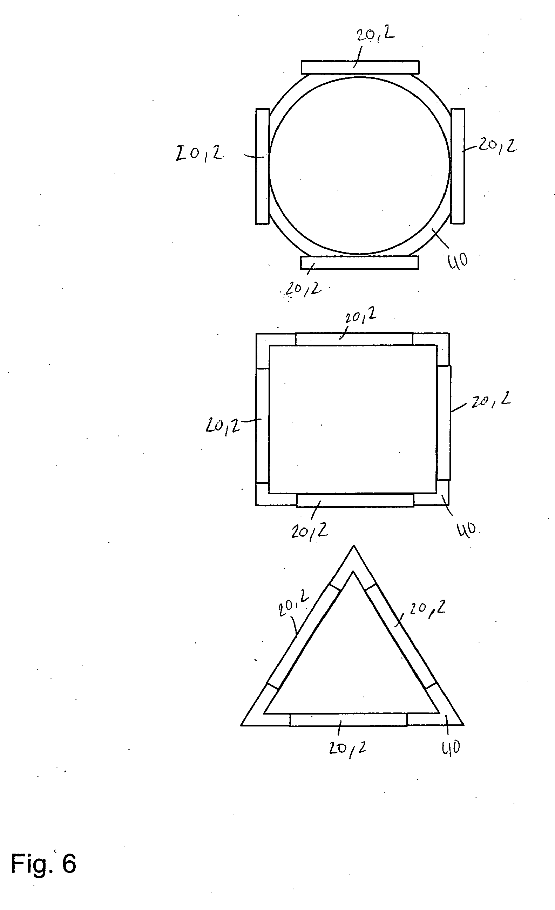

In Fig. 4 ist eine Sensoranordnung mit mehreren Leiterplatten und/oder Platinen 20 gemäß Fig. 2, mit jeweils zwei Sensorelemente-Paaren welche auf Ober- und Unterseite ausgebildet sind, gezeigt, die zu einer räumlichen Leiterplattenanordnung zusammengefügt sind. Dabei lassen sich beispielsweise drei oder vier oder mehrere solcher Leiterplatten zu einem Vieleck zusammenschließen, wobei, wie in Fig. 6 gezeigt, unterschiedliche Geometrien möglich sind.

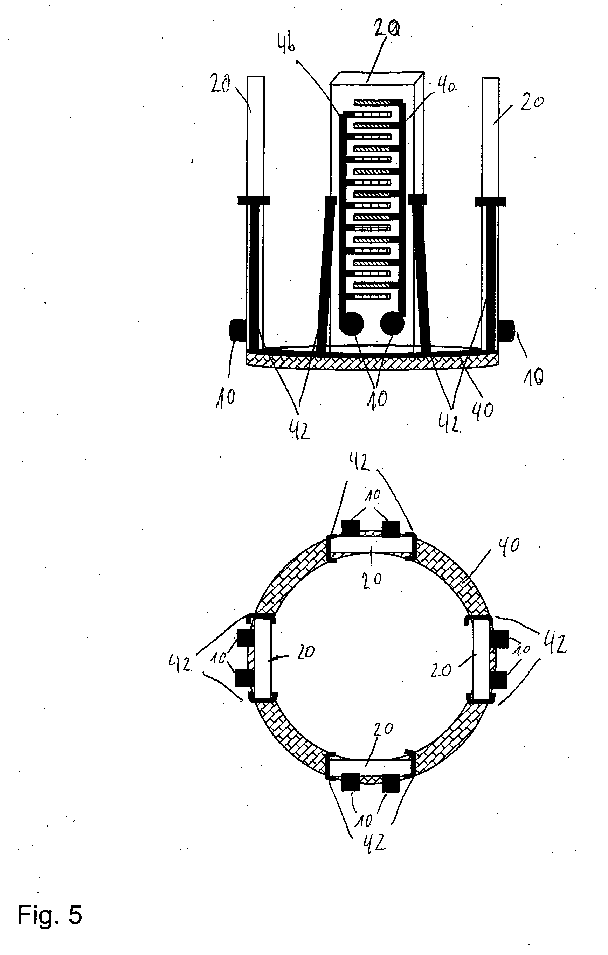

Zur Verbindung der Platinen 20 untereinander kann, wie in Fig. 5 gezeigt, ein Probenkörper 40 eingesetzt sein, der Haltevorrichtungen 42, insbesondere mit Klemm- und/oder Schraubverbindungen, zur Aufnahme und/oder Führung der Platinen 20 aufweist. Ergänzend können auch eine oder mehrere Befestigungsvorrichtungen zur Montage des Probenkörpers 40 in einer Schaltanlage vorgesehen sein.

Auch der Probenkörper kann dabei, wie in Fig. 6 gezeigt, gänzlich unterschiedliche Geometrien aufweisen.

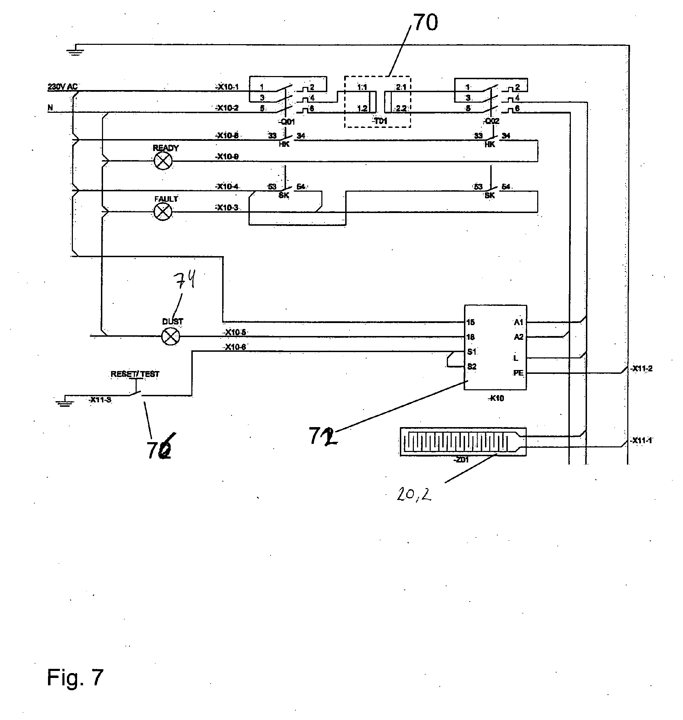

In Fig. 7 ist Vorrichtung zur vorausschauenden Ermittlung verschmutzungsbedingter Störfälle einer Schaltanlage gezeigt, welche einen Trenntransformator 70, sowie ein Isolationsmessgerät 72, sowie eine erfindungsgemäße Sensoranordnung gemäß einem der Ansprüche 1 bis 21 umfasst. Sensoranordnung und Isolationsmessgerät sind in ein, mittels Trenntransformator 70 gebildetes elektrisches Sensornetz geschaltet, über welches sie zusammenwirken und dessen Eigenschaften vom Isolationsmessgerät 72 überwacht werden und wobei durch Ablagerungen und/oder Verunreinigungen auf der Sensoranordnung eine Schädigung der Isolationsfähigkeit des Sensornetzes bewirken, welche detektierbar ist.

Die jeweilige Sensoranordnung entspricht dabei einer der vorbeschriebenen erfindungsgemäßen Ausgestaltungen einer Sensoranordnung zur vorausschauenden Ermittlung verschmutzungsbedingter Störfälle einer Schaltanlage.

Über den Trenntransformator 70 ist dem jeweiligen Sensorelemente-Paar über die entsprechenden Anschlußelemente 10 weiterhin eine Potentialdifferenz beziehungsweise eine Spannung beaufschlagt, welche, zumindest anteilig, auch zwischen zwei benachbarten, aufeinanderfolgenden Kontaktflächen 12a,12b eines Sensorelementen-Paares anliegt. Lagern sich entsprechende Verunreinigung, wie beispielsweise Stäube oder Feuchtigkeit, die in aller Regel auch leitfähig sind zwischen zwei derartigen Kontaktflächen 12a,12b ab, so fließt zwischen beiden Kontaktflächen beziehungsweise deren Leiterelemente 6a,6b und damit auch zwischen den zugehörigen Sensorelementen 4a,4b ein Strom, der die Isolationsfähigkeit des Sensornetzes schädigt. Diese Schädigung der Isolationsfähigkeit ist durch das Isolationsmeßgerät 72 feststellbar und wird von diesem entsprechend gemeldet.

Vorteilhaft ist zur Meldung der Schädigung der Isolationsfähikeit des Sensornetzes ein akustischer und/oder optischer Signalgeber 74 vorgesehen, der mit dem Isolationsmessgerät 72 zusammenwirkt und bei Auftreten einer Schädigung ein entsprechendes Signal generiert.

Auch eine Testvorrichtung 76 zur Überprüfung der Funktionsfähigkeit des Isolationsmessgerätes 72, vorzugsweise ein Schalter oder Taster, ist vorgesehen, der mit dem Isolationsmessgerät 72 zusammenwirkt und/oder eine vermeintliche Schädigung des Sensornetzes simuliert.

## Patentansprüche

1. Sensoranordnung (2) zur vorausschauenden Ermittlung verschmutzungsbedingter Störfälle, insbesondere in einem Schaltschrank und/oder einer Schaltanlage, wobei wenigstens ein Trägerelement vorgesehen ist, welches
• wenigstens zwei Sensorelementen (4a,4b) mit jeweils einem oder mehreren parallel ausgerichteten und/oder äquidistant beabstandeten Leiterelementen (6a,6b) aufweist, wobei
• die Leiterelemente (6a,6b) eines jeden Sensorelementes (4a,4b)jeweils elektrisch parallel geschaltet und elektrisch leitend miteinander verbunden sind,
• jedes Leiterelement (6a,6b) wenigstens eine elektrisch leitfähige Kontaktfläche (12a,12b) aufweist und
• jeweils zwei Sensorelemente (4a,4b) derart paarweise angeordnet sind, dass deren Leiterelemente (6a,6b) parallel zueinander ausgebildet sind und wenigstens ein Leiterelement (6a) des einen Sensorelementes (4a) in einen Abstand zwischen Leiterelementen (6b) des jeweils anderen Sensorelementes (4b) eingreift, wodurch eine Art Verzahnung der der beiden Sensorelemente (4a,4b) bewirkt und ein Sensorelementen-Paar gebildet ist.

2. Sensoranordnung (2) nach Anspruch 1, **dadurch gekennzeichnet, dass** für jedes Sensorelement (4a,4b) auf dem Trägerelement wenigstens ein Anschlusselement (10), insbesondere eine Anschlussklemme, vorgesehen ist, über welches das jeweilige Sensorelement (4a,4b) elektrisch kontaktierbar ist.

3. Sensoranordnung (2) nach Anspruch 1 oder Anspruch 2, **dadurch gekennzeichnet, dass** jedes Sensorelement (4a,4b) wenigstens zwei Leiterelemente (6a,6b) aufweist.

4. Sensoranordnung (2) nach einem der vorherigen Ansprüche, **dadurch gekennzeichnet, dass** die Leiterelemente (6a,6b) eines Sensorelementes (4a,4b) und/oder die Leiterelemente (6a,6b) jeweils zweier paarweise angeordneter Sensorelemente (4a,4b) in einer Ebene angeordnet sind.

5. Sensoranordnung (2) nach einem der vorherigen Ansprüche, **dadurch gekennzeichnet, dass** die Leiterelemente (6a,6b) zweier paarweise angeordneter Sensorelemente (4a,4b) derart ausgebildet sind, dass deren Kontaktflächen (12a,12b) gefluchtet und/oder parallel zueinander angeordnet sind.

6. Sensoranordnung (2) nach einem der vorherigen Ansprüche, **dadurch gekennzeichnet, dass** das Trägerelement aus elektrisch nicht leitendem oder sehr schwach leitendem Material, insbesondere aus Kapton oder Kunststoff, ausgebildet ist.

7. Sensoranordnung (2) nach einem der vorherigen Ansprüche, **dadurch gekennzeichnet, dass** die Leiterelemente (6a,6b) zweier paarweise angeordneter Sensorelemente (4a,4b) äquidistant beabstandet sind und/oder aufeinander angepasst sind.

8. Sensoranordnung (2) nach einem der vorherigen Ansprüche, **dadurch gekennzeichnet, dass** jeweils paarweise angeordnete Sensorelemente (4a,4b) mit unterschiedlich beabstandeten Leiterelementen (6a,6b) vorgesehen sind.

9. Sensoranordnung (2) nach einem der vorherigen Ansprüche, **dadurch gekennzeichnet, dass** die Empfindlichkeit und/oder Ansprechwahrscheinlichkeit und/oder das Ansprechverhalten eines Sensorelemente-Paares durch den Abstand zweier benachbarter Kontaktflächen (12a,12b) bestimmt ist, wobei durch einen kleineren Abstand eine höhere Empfindlichkeit und durch einen größeren Abstand eine geringere Empfindlichkeit bewirkt ist.

10. Sensoranordnung (2) nach einem der vorherigen Ansprüche, **dadurch gekennzeichnet, dass** die Größe des Abstandes zwischen den Leiterelementen (6a,6b), insbesondere die Größe des Abstandes zwischen den Kontaktflächen (12a,12b) der Leiterelemente (6a,6b) zweier paarweise angeordneter Sensorelemente (4a,4b) die Empfindlichkeit und/oder die Ansprechwahrscheinlichkeit des jeweiligen Sensorelementen-Paares und/oder der Sensoranordnung (2) bestimmt.

11. Sensoranordnung (2) nach einem der vorherigen Ansprüche, **dadurch gekennzeichnet, dass** wenigstens ein Trägerelement mehrere Sensorelemente-Paare aufweist.

12. Sensoranordnung (2) nach einem der vorherigen Ansprüche, **dadurch gekennzeichnet, dass** das Trägerelement auf Ober- und Unterseite jeweils wenigstens ein Sensorelemente-Paar aufweist.

13. Sensoranordnung (2) nach einem der vorherigen Ansprüche, **dadurch gekennzeichnet, dass** wenigstens ein Trägerelement als Platine ausgebildet ist, welches Leiterelemente (6a,6b) mit Kontaktfläche (12a,12b) sowie deren elektrische Verbindungen aufweist, die als Leiterbahnen ausgebildet und/oder auf das Trägerelement aufgebracht sind.

14. Sensoranordnung (2) nach Anspruch 13, **dadurch gekennzeichnet, dass** die Leitrebahnen bis auf das Anschlusselement (10) und die Kontaktflächen (12a,12b) elektrisch gegenüber der Umgebung isoliert sind.

15. Sensoranordnung (2) nach einem der Ansprüche 13 oder 14, **dadurch gekennzeichnet, dass** für jedes Sensorelement (4a,4b) wenigstens ein Anschlusselement (10) vorgesehen ist, wobei mehrere Sensorelemente (4a,4b) auch über ein Anschlusselement (10) kontaktierbar sind.

16. Sensoranordnung (2) nach einem der Ansprüche 13 bis 15, **dadurch gekennzeichnet dass** mehrere Leiterplatten und/oder Platinen (20) mit jeweils wenigstens einem Sensorelementen-Paar mit Anschlusselementen (10) zu einer räumlichen Leiterplattenanordnung zusammengefügt sind, wobei wenigstens ein Probenkörper (40) mit zumindest einer Haltevorrichtung (42) zur Aufnahme von zwei, drei, vier oder mehreren derartigen Leiterplatten und/oder Platinen (20) vorgesehen ist.

17. Sensoranordnung (2) nach Anspruch 16, **dadurch gekennzeichnet, dass** die Platinen (20) und/oder Leiterplatten einander beabstandet angeordnet sind.

18. Sensoranordnung (2) nach einem der Ansprüche 16 oder 17, **dadurch gekennzeichnet, dass** die Haltevorrichtung (42) einen Klemm- und/oder Federmechanismus und/oder eine Führung zum Einbau und/oder Arretieren der entsprechenden Leiterplatten und/oder Platinen (20) aufweist.

19. Sensoranordnung (2) nach einem der Ansprüche 16 bis 18, **dadurch gekennzeichnet dass** wenigstens eine Leiterplatte und/oder Platine (20) Ausnehmungen (14) zum Eingriff der Haltevorrichtung (42) aufweist.

20. Sensoranordnung (2) nach einem der Ansprüche 16 bis 19, **dadurch gekennzeichnet, dass** wenigstens eine Leiterplatte oder Platine (20) Ausnehmungen (16) zum Durchgriff von Schrauben aufweist und/oder mittels Schraubverbindung mit dem Probenkörper (40) verbunden ist.

21. Sensoranordnung (2) nach einem der Ansprüche 16 bis 20, **dadurch gekennzeichnet, dass** der Probenkörper (40) eine Befestigungsvorrichtung zur Montage in einem Schaltschrank und/oder einer Schaltanlage aufweist.

22. Vorrichtung zur vorausschauenden Ermittlung verschmutzungsbedingter Störfälle einer Schaltanlage, welche wenigstens eine Strom-/Spannungsquelle (70), sowie wenigstens ein Isolationsmessgerät (72), sowie wenigstens eine Sensoranordnung (2) gemäß einem der Ansprüche 1 bis 21 umfasst, wobei jeweils Sensoranordnung (2) und Isolationsmessgerät (72) in ein, mittels der Strom-/Spannungsquelle (70) gebildetes elektrisches Sensornetz geschaltet sind, über welches sie zusammenwirken und dessen Eigenschaften vom Isolationsmessgerät (72) überwacht sind und wobei durch Ablagerungen und/oder Verunreinigungen auf der Sensoranordnung (2) eine Schädigung der Isolationsfähigkeit des Sensornetzes bewirkt ist, welche detektierbar ist.

23. Vorrichtung nach Anspruch 22, **dadurch gekennzeichnet, dass** als Strom-/Spannungsquelle (70) ein Trenntransformator eingesetzt ist, der an ein bestehendes elektrisches Netz, insbesondere einer Schaltanlage, koppelt.

24. Vorrichtung nach einem der Ansprüche 22 oder 23, **dadurch gekennzeichnet, dass** wenigstens eine der Sensoranordnungen (2) einen offenen Probenkörper (40) mit mehreren Platinen (20) und/oder Leiterplatten mit Sensorelementen (4a,4b) mit blanken, elektrisch leitfähigen Kontaktflächen (12a,12b) aufweist, auf denen sich Staub, Schmutz und/oder Feuchtigkeit bei Kondensation niederschlagen, wobei der Probenkörper (40) derart ausgebildet und/oder angeordnet ist, dass er möglichst gut und/oder gleichmäßig von Luft umströmt und/oder durchströmt ist.

25. Vorrichtung nach einem der Ansprüche 22 bis 24, **dadurch gekennzeichnet, dass** über die Strom-/Spannungsquelle (70) einem jeweiligen Sensorelemente-Paar über die entsprechenden Anschlußelemente (10) eine Potentialdifferenz und/oder eine Spannung beaufschlagt ist, welche, zumindest anteilig, auch zwischen zwei benachbarten, aufeinander folgenden Kontaktflächen (12a,12b) eines Sensorelementen-Paares anliegt.

26. Vorrichtung nach einem der Ansprüche 22 bis 25, **dadurch gekennzeichnet, dass** bei Ablagerung von Verunreinigung, wie insbesondere Stäube oder Feuchtigkeit, zwischen zwei benachbarten Kontaktflächen (12a,12b), ein Stromfluss zwischen beiden Kontaktflächen (12a,12b) beziehungsweise deren Leiterelementen (6a,6b) und damit auch zwischen den zugehörigen Sensorelementen (4a,4b) bewirkt ist, durch welchen die Isolationsfähigkeit des Sensornetzes geschädigt ist.

27. Vorrichtung nach einem der Ansprüche 22 bis 26, **dadurch gekennzeichnet, dass** eine Schädigung der Isolationsfähigkeit des Sensornetzes, insbesondere eine Stromfluss zwischen zwei benachbarten Kontaktflächen (12a,12b) eines Sensorelemeneten-Paares, durch das Isolationsmeßgerät (72) feststellbar ist.

28. Vorrichtung nach einem der Ansprüche 22 bis 27, **dadurch gekennzeichnet, dass** ein akustischer und/oder optischer Signalgeber (74) vorgesehen ist, der mit dem Isolationsmessgerät (72) zusammenwirkt und bei Auftreten einer Schädigung der Isolationsfähigkeit des Sensornetzes ein entsprechendes Signal generiert.

29. Vorrichtung nach einem der Ansprüche 22 bis 28, **dadurch gekennzeichnet, dass** eine Testvorrichtung (76) zur Überprüfung der Funktionsfähigkeit des lsolationsmessgerätes (72), insbesondere ein Schalter oder Taster, vorgesehen ist.

30. Vorrichtung nach einem der Ansprüche 22 bis 29, **dadurch gekennzeichnet, dass** sie in einem Schaltschrank und/oder einer Schaltanlage einsetzbar ist.

31. Schaltanlage mit wenigstens einer Vorrichtung zur vorausschauenden Ermittlung verschmutzungsbedingter Störfälle gemäß einem der Ansprüche 22 bis 30.

32. Schaltanlage nach Anspruch 31, **dadurch gekennzeichnet, dass** wenigstens ein Schaltschrank vorgesehen ist, in dem wenigstens eine derartige Vorrichtung montiert ist.

33. Schaltanlage nach einem der Ansprüche 31 oder 32, **dadurch gekennzeichnet, dass** eine detektierte Schädigung des jeweiligen Sensornetzes der Vorrichtung in Abhängigkeit des Abstandes zwischen zwei benachbarten Kontaktflächen (12a,12b) der eingesetzten Sensoranordnung (2) ein Maß für den Grad der Verunreinigung der Schaltanlage ist.

34. Verfahren zur vorausschauenden Ermittlung verschmutzungsbedingter Störfälle einer Schaltanlage, wobei mittels wenigstens einer Strom-/Spannungsquelle (70), sowie wenigstens eines Isolationsmessgerätes (72), sowie wenigstens einer Sensoranordnung (2) gemäß einem der Ansprüche 1 bis 21 ein elektrisches Sensornetz gebildet wird, über welches Sensoranordnung (2) und Isolationswächter (72) zusammenwirken und dessen Eigenschaften vom Isolationsmessgerät (72) überwacht werden, wobei Ablagerungen und/oder Verunreinigungen auf der Sensoranordnungen (2) eine Schädigung der Isolationsfähigkeit des Sensornetzes bewirken, welche detektiert wird.

35. Verfahren nach Anspruch 34, **dadurch gekennzeichnet, dass** dem jeweiligen Sensorelemente-Paar eine Potentialdifferenz und/oder eine Spannung beaufschlagt wird, durch welche bei Ablagerung von Verunreinigungen zwischen zwei benachbarten Kontaktflächen (12a,12b) der jeweiligen Sensoranordnung (2) ein Stromfluss bewirkt wird, welcher die Isolationsfähigkeit des Sensornetzes schädigt.

36. Verfahren nach einem der Ansprüche 34 oder 35, **dadurch gekennzeichnet, dass** eine detektierte Schädigung des jeweiligen Sensornetzes in Abhängigkeit des Abstandes zwischen zwei benachbarten Kontaktflächen (12a,12b) der eingesetzten Sensoranordnung (2) den Grad der Verunreinigung der jeweiligen Schaltanlage angibt.

37. Verfahren nach einem der Ansprüche 34 bis 36, **dadurch gekennzeichnet, dass** die Empfindlichkeit und/oder Ansprechwahrscheinlichkeit und/oder das Ansprechverhalten eines Serisorelemente-Paares durch den Abstand zweier benachbarter Kontaktflächen (12a,12b) bestimmt wird, wobei durch einen kleineren Abstand eine höhere Empfindlichkeit und durch einen größeren Abstand eine geringere Empfindlichkeit bewirkt wird.

38. Verfahren nach einem der Ansprüche 34 bis 37, **dadurch gekennzeichnet, dass** eine detektierte Schädigung des jeweiligen Sensornetzes der Vorrichtung in Abhängigkeit des Abstandes zwischen zwei benachbarten Kontaktflächen (12a,12b) der eingesetzten Sensoranordnung (2) ein Maß für den Grad der Verunreinigung der Schaltanlage ist.
